# EUROPEAN PATENT SPECIFICATION

(11) **EP 3 660 577 B1**
(45) Date of publication and mention of the grant of the patent: **22.02.2023**
(21) Application number: 19198413.7
(22) Date of filing: 19.09.2019
(51) Int. Cl.: G02B 27/01, G02B 26/08

(54) **DISPLAY DEVICE AND MOBILE BODY**
ANZEIGEVORRICHTUNG UND MOBILER KÖRPER
DISPOSITIF D'AFFICHAGE ET CORPS MOBILE

(30) Priority: 28.11.2018 JP 2018222290
(43) Date of publication of application: 03.06.2020
(73) Proprietor: Ricoh Company, Ltd., Tokyo 143-8555 (JP)
(72) Inventor: YASUI, Maiko, Kanagawa 222-8530 (JP)
(74) Representative: J A Kemp LLP

(56) References cited:
- EP-A1- 3 064 975
- JP-A- 2001 235 698
- JP-A- 2015 148 665
- JP-A- 2015 179 234
- JP-A- 2016 011 982
- JP-A- 2017 219 799
- US-A1- 2011 227 487

## Description

### BACKGROUND

### Technical Field

Embodiments of the present disclosure relates to a display device and a mobile body.

### Background Art

JP-2015-148665-A discloses a windshield head-up display device that is set in an automobile and that uses a front window glass as a part of a projection surface.

JP 2015 179234 A discloses a light source for a projector relevant to the background art of the invention.

JP 2016 011982 A, JP 2017 219799 A, EP 3064975 A1 , and US 2011/227487 A1 disclose display devices forming part of the technological background relevant to the disclosure.

### SUMMARY

Embodiments of the present disclosure described herein provide a display device and a mobile body. The display device is defined by appended claim 1. The mobile body is defined by appended claim 11.

According to one aspect of the present disclosure, a display device and a mobile body each of which prevents a reduction in image quality can be provided.

### BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.
FIG. 1 illustrates a system configuration of a display system according to an embodiment of the present disclosure;
FIG. 2 illustrates a configuration of a mounted device according to an embodiment of the present disclosure;
FIG. 3 is a top view of the mounted device according to an embodiment of the present disclosure;
FIG. 4 is a side view of the mounted device according to an embodiment of the present disclosure;
FIG. 5 is a side cross-sectional view of the mounted device according to an embodiment of the present disclosure;
FIG. 6 is a top cross-sectional view of the mounted device according to an embodiment of the present disclosure;
FIG. 7 illustrates a configuration of the display device according to an embodiment of the present disclosure;
FIG. 8 illustrates how a screen unit is attached to and removed from the display device according to an embodiment of the present disclosure;
FIG. 9 illustrates a hardware configuration of the display device according to an embodiment of the present disclosure;
FIG. 10 illustrates a functional configuration of the display device according to an embodiment of the present disclosure;
FIG. 11 illustrates a specific configuration of a light source device according to an embodiment of the present disclosure;
FIG. 12 illustrates a specific configuration of a light deflecting device according to an embodiment of the present disclosure;
FIG. 13 illustrates a specific configuration of a screen according to an embodiment of the present disclosure;
FIGs. 14A and 14B illustrate difference in function of a microlens array due to difference in magnitude relationship between an incident light beam diameter and a lens diameter;
FIG. 15 illustrates correspondence between a mirror of the light deflecting device and a scanning range;
FIG. 16 illustrates the track of scanning lines during two-dimensional scanning;
FIG. 17 is a front view of the display device according to an embodiment of the present disclosure;
FIG. 18 is a side view of the display device according to an embodiment of the present disclosure;
FIG. 19 illustrates examples of overall effective values, in the X, Y, and Z directions, of attachment portions of the mounted device according to an embodiment of the present disclosure;
FIG. 20 is a bottom view of the display device according to an embodiment of the present disclosure;
FIG. 21A is a perspective view and FIG. 21B is an exploded perspective view of the display device according to an embodiment of the present disclosure;
FIG. 22 is an exploded perspective view of a screen unit according to an embodiment of the present disclosure;
FIG. 23 is a cross-sectional view of the screen unit according to an embodiment of the present disclosure; and
FIG. 24 is a cross-sectional view of a screen unit according to a modification of the embodiment.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is limited by the appended claims.

Hereafter, embodiments of the present invention will be described with reference to the drawings. In descriptions with reference to the drawings, the same elements will be denoted by the same numerals, and redundant description will be omitted.

### Embodiments

### System Configuration

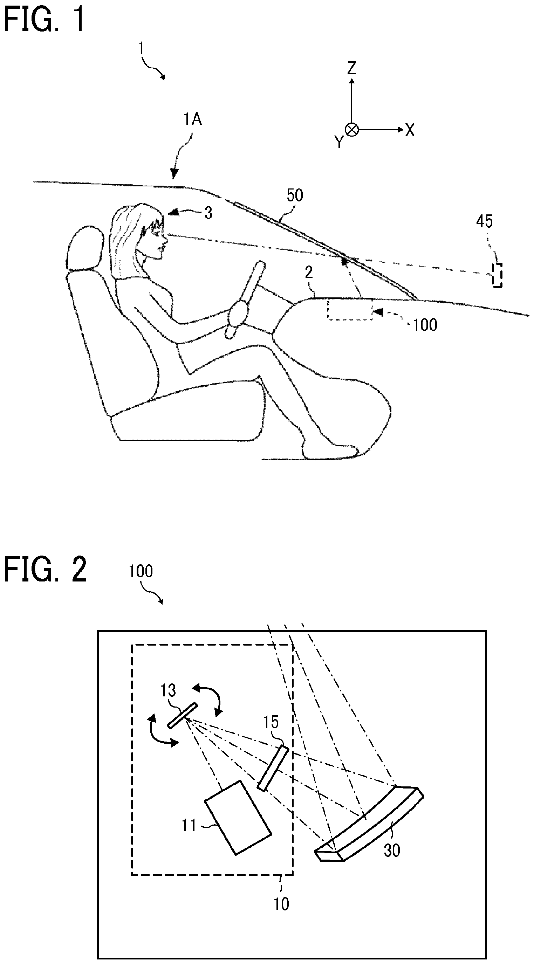

FIG. 1 illustrates a system configuration of a display system according to an embodiment.

A display system 1 enables an observer 3 to visually recognize a display image by causing a transmissive reflection member to project projection light projected from a mounted device 100. The display image is an image that is displayed as a virtual image 45 that is overlaid on the sight of the observer 3. For example, the display system 1 is mounted in a mobile body, such as a vehicle, an airplane, or a ship; or in an immobile body, such as a driving simulation system or a home theater system. In the present embodiment, a case where the display system 1 is mounted in an automobile, which is an example of a mobile body 1A, will be described. The use of the display system 1 is not limited to this. Hereafter, coordinate axes are defined as follows: the travelling direction of the mobile body 1A is the X-axis direction, the right and left directions is the Y-axis direction, and the up-and-down directions is the Z-axis direction.

For example, the display system 1 enables the observer 3 (driver) to visually recognize, via a front glass 50, navigation information for driving a vehicle (such as vehicle velocity, route information, distance to a destination, the present location, the presence/absence and the position of an object (physical object) in front of the vehicle, traffic signs of speed limit and the like, traffic jam information, and the like). In this case, the front glass 50 functions as a transmissive reflection member that transmits a part of incident light and reflects at least a part of the remaining light. The distance from the viewpoint position of the observer 3 to the front glass 50 is in the range of several tens of centimeters to about 1 meter. Instead of the front glass 50, a combiner that is made of a transparent plastic disk or the like may be used as a transmissive reflection member.

For example, the mounted device 100 is a head-up display device (HUD device). The mounted device 100 may be disposed at any appropriate position in accordance with the interior design of the automobile. For example, the mounted device 100 may be disposed below a dashboard 2 of the automobile or may be embedded in the dashboard 2. In the present embodiment, a case where the mounted device 100 is mounted in the dashboard 2 will be described.

FIG. 2 illustrates a configuration of the mounted device 100 according to an embodiment of the present disclosure. The mounted device 100 includes a display device 10, a freeform surface mirror 30, and the front glass 50.

The display device 10 includes a light source device 11, a light deflecting device 13, and a screen 15. The light source device 11 emits a laser beam, which is emitted from a light source, to the outside of the device. For example, the light source device 11 may emit a laser beam in which three laser beams having R, G, and B colors are combined. The laser beam emitted from the light source device 11 is guided to a reflection surface of the light deflecting device 13. The light source device 11 includes, as the light source, a semiconductor light emitting element such as a laser diode (LD). The light source is not limited to this. The light source may include a semiconductor light emitting element such as a light emitting diode (LED).

The light deflecting device 13 is an example of an image forming unit that receives irradiation light emitted from the light source device 11 and emits image light for forming an image. The light deflecting device 13 changes the travelling direction of the laser beam by using microelectromechanical systems (MEMS) or the like. For example, the light deflecting device 13 includes scanning means including a single very small MEMS mirror that swings with respect to two orthogonal axes or two MEMS mirrors that swing or rotate with respect to one axis. A laser beam emitted from the light deflecting device 13 is scanned across the screen 15. Instead of a MEMS mirror, the light deflecting device 13 may include a polygon mirror or the like.

The screen 15 is an example of a screen on which image light emitted from the light deflecting device 13 forms an image. The screen 15 is a diffusion member that has a function of diffusing a laser beam at a predetermined diffusion angle. For example, the screen 15 includes, as a form of an exit pupil expander (EPE), a transmissive optical element that has light diffusing effect, such as a microlens array (MLA) or a diffusion plate. The screen 15 may be a reflective optical element that has light diffusing effect, such as a micromirror array. The screen 15 forms an intermediate image 40, which is a two-dimensional image, on the screen 15 as the laser beam emitted from the light deflecting device 13 is scanned over the screen 15.

A projection method used by the display device 10 may be any of the following: a "panel method" that forms the intermediate image 40 by using an imaging device, such as a liquid crystal panel, a digital micromirror device (DMD) panel, or a vacuum fluorescent display (VFD); and a "laser scanning method" that forms the intermediate image 40 by scanning a laser beam emitted from the light source device 11 by using scanning means.

The display device 10 according to the present embodiment uses the "laser scanning method". In general, the "laser scanning method" can form a high-contrast image because emission or non-emission can be allocated to each pixel. The display device 10 may use the "panel method" as the projection method.

The virtual image 45, which is projected onto the freeform surface mirror 30 and the front glass 50 by the light beam emitted from the screen 15, is displayed so as to be magnified from the intermediate image 40. The freeform surface mirror 30 is designed and disposed so as to cancel out the inclination, distortion, displacement, and the like of an image, which occur due to a curved shape of the front glass 50. The freeform surface mirror 30 may be set so as to be rotatable around a predetermined rotation shaft. In this case, the freeform surface mirror 30 can change the display position of the virtual image 45 by adjusting the reflection direction of the laser beam emitted from the screen 15.

Here, the freeform surface mirror 30 is designed, by using existing optical designs software, to have a certain level of focal power so that the virtual image 45 can be formed at a desirable position. In the display device 10, the focal power of the freeform surface mirror 30 is set so that the virtual image 45 is displayed, for example, at a position (depth position) within the range of 1 meter to 30 meters (preferably 10 meters or less) from the viewpoint of the observer 3. The freeform surface mirror 30 may be a concave mirror or another optical element having focal power. The freeform surface mirror 30 is an example of an image-forming optical system.

The front glass 50 is a transmissive reflection member that has a function (partial reflection function) of transmitting a part of a laser beam and reflecting at least a part of the remaining beam. The front glass 50 functions as a partial transmissive mirror that enables the observer 3 to visually recognize the front view and the virtual image 45. For example, the virtual image 45 is image information that enables the observer 3 to visually recognize vehicle information (velocity, travelled distance, and the like), navigation information (route guide, traffic information, and the like), warning information (collision warning and the like), and the like. The transmissive reflection member may be a front windshield or the like that is independent from the front glass 50. The front glass 50 is an example of a reflection member.

The virtual image 45 may be displayed so as to be overlaid on a view in front of the front glass 50. The front glass 50 is not flat but curved. Therefore, the position where the virtual image 45 is formed is determined by the curves of the freeform surface mirror 30 and the front glass 50. As the front glass 50, a half transmissive mirror (combiner) that is an independent transmissive reflection member having a partial reflection function may be used.

With such configuration, a laser beam emitted from the screen 15 is projected toward the freeform surface mirror 30, and is reflected by the front glass 50. With the light reflected by the front glass 50, the observer 3 can visually recognize the virtual image 45, which is a magnified image of the intermediate image 40 formed on the screen 15.

### Configuration of Attachment Portion

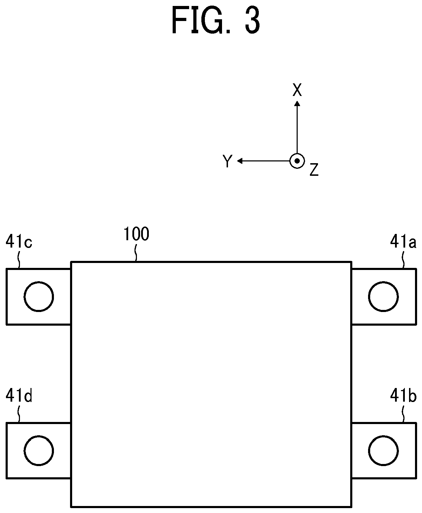

FIG. 3 is a top view of the mounted device 100. As illustrated in FIG. 3, the mounted device 100 includes two attachment portions 41a and 41b and two attachment portions 41c and 41d respectively on the right side surface and the left side surface. The attachment portions 41a to 41d are used to attach the mounted device 100 to the mobile body 1A. Each of the attachment portions 41a to 41d has a screw hole, and the mounted device 100 is attached to the mobile body 1A via the screw holes.

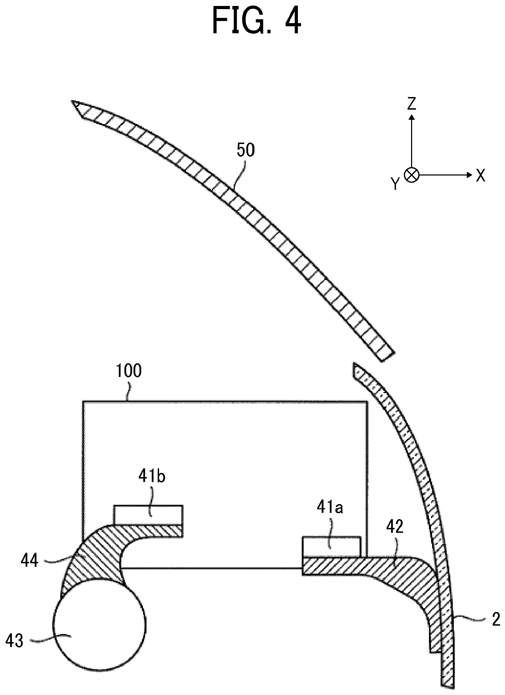

FIG. 4 is a right side view of the mounted device 100 attached to the mobile body 1A. The mobile body 1A includes an attachment bracket 42, which is welded or fastened to the dashboard 2, and an attachment bracket 44, which is welded or fastened to a cross car beam 43. The attachment bracket 42 and the attachment bracket 44 are examples of a setting portion. The mounted device 100 is attached to the mobile body 1A by fastening the attachment portions 41a and 41c to the attachment bracket 42 by using screws or the like and by fastening the attachment portions 41b and 41d to the attachment bracket 44 by using screws or the like.

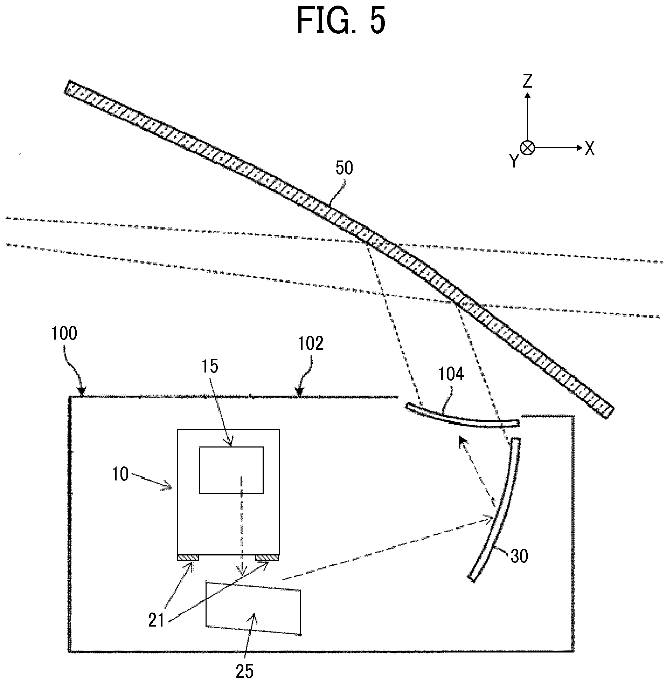

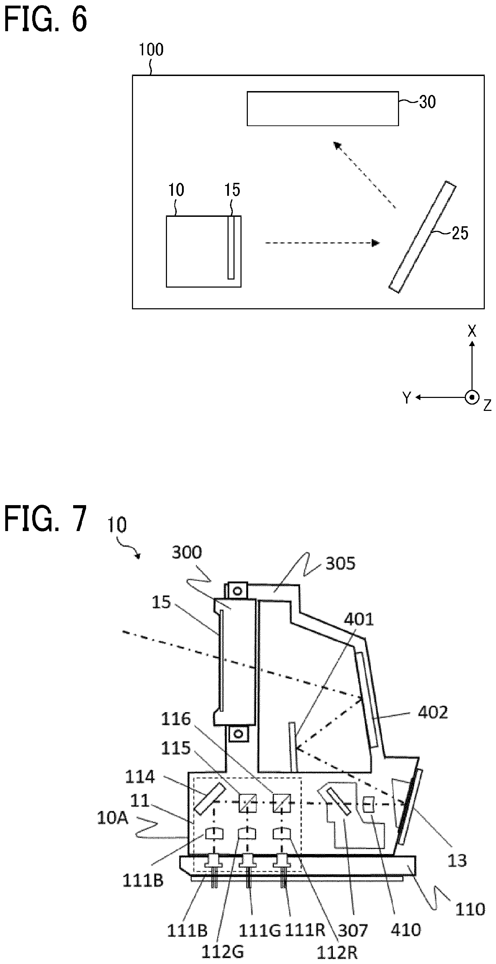

FIG. 5 is a side cross-sectional view of the mounted device 100 as viewed from the rightward direction (the right side in the Y direction). FIG. 6 is a top cross-sectional view of the mounted device 100 as viewed from the upward direction (the Z direction). FIGs. 5 and 6 illustrate specific arrangement in the mounted device 100.

The mounted device 100 includes, in addition to the display device 10 and the freeform surface mirror 30 illustrated in FIG. 2, a reflection mirror 25 that is disposed in a housing 102 and that reflects a laser beam, which is projected from the display device 10, toward the freeform surface mirror 30. The housing 102 has an emission window 12 that transmits reflected light reflected by the freeform surface mirror 30 and that projects the reflected light onto the front glass 50. The display device 10 and the screen 15 are disposed so that the laser beam is projected in the rightward direction (the right side in the Y direction).

FIG. 7 illustrates a configuration of the display device 10. The display device 10 includes, in addition to the light source device 11, the light deflecting device 13, and the screen 15 illustrated in FIG. 2, the following elements: a filter 307 that modulates a laser beam emitted from the light source device 11; a condenser lens 410 that condenses the laser beam modulated by the filter 307 toward the light deflecting device 13; a mirror 401 that reflects the laser beam deflected by the light deflecting device 13; and a second mirror 402 that reflects, toward the screen 15, the laser beam reflected by the mirror 401.

The light source device 11 includes: light source elements 111R, 111G, and 111B (hereafter, referred to as the light source element 111, if discrimination is not necessary); coupling (collimate) lenses 112R, 112G, and 112B; apertures 113R, 113G, and 113B; combining elements 114, 115, and 116; and a lens 117.

For example, the light source elements 111R, 111G, and 111B for three colors (R, G, B) are laser diodes (LDs) each of which has a single emission point or multiple emission points. The light source elements 111R, 111G, and 111B emit laser beams having different wavelengths λR, λG, and λB (for example, λR = 640 nm, λG = 530 nm, and λB = 445 nm).

The emitted laser beams are respectively coupled by the coupling lenses 112R, 112G, and 112B and become substantially parallel light beams. The coupled laser beams are combined by the three combining elements 114, 115, and 116. The combining elements 114, 115, and 116 are plate-shaped or prism-shaped dichroic mirrors, and reflect or transmit laser beams in accordance with the wavelength to combine the laser beams into a single light beam. The combined light beam passes through the filter 307 and the condenser lens 410 and is guided to the light deflecting device 13.

The display device 10 is formed by assembling a housing 10A, a mirror unit (mirror holding member) 305, and a screen unit 300. The housing 10A holds and contains the following elements: the light source elements 111R, 111G, and 111B; the coupling lenses 112R, 112G, and 112B; the combining elements 114, 115, and 116; the filter 307; the condenser lens 410; and the light deflecting device 13. The mirror unit 305 holds the mirror 401 and the second mirror 402. The screen unit 300 is an example of a holding member configured to hold the screen 15.

A light source unit 110 is removable from the housing 10A and holds the light source elements 111R, 111G, and 111B.

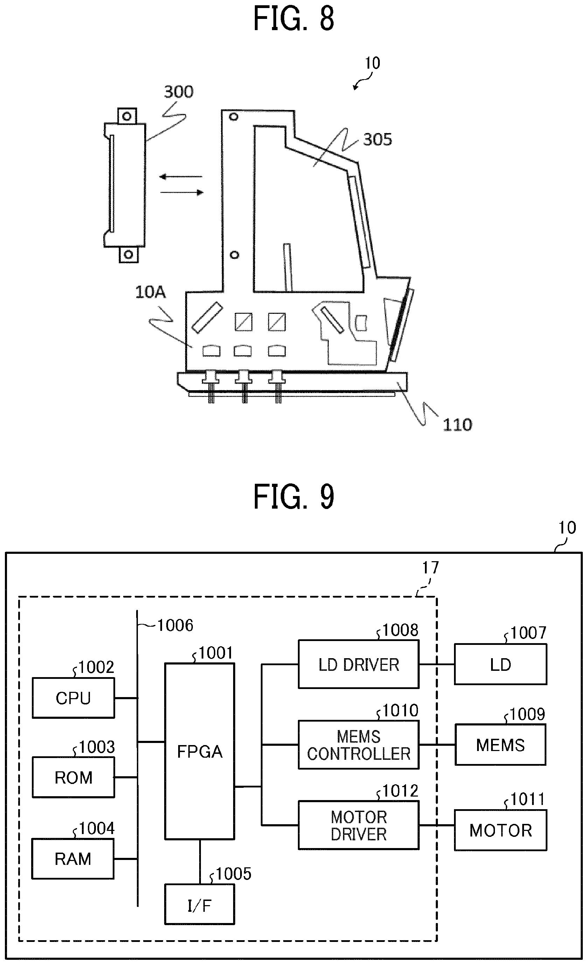

FIG. 8 illustrates how the screen unit 300 is attached to and removed from the display device 10. The screen unit 300 is attachable to and removable from the housing 10A without removing the light source unit 110 and the mirror unit 305 from the housing 10A. The screen unit 300 is attachable to and removable from the housing 10A without removing the light source device 11, the filter 307, the condenser lens 410, and the light deflecting device 13.

The housing 10A is made of die-cast aluminum, and the mirror unit 305 is made of a resin. The housing 10A has a higher thermal conductivity than the mirror unit 305.

Image light diffused by the screen 15 reaches the front glass 50 along a light path illustrated in FIGs. 1 and 2. During practical use, sunlight that is incident on the front glass 50 may travel reversely along the light path and may reach the screen 15 or the screen unit 300. In this case, the screen 15 may deform or fade due to heat of sunlight, and image quality may decrease.

Therefore, in the present embodiment, the screen unit 300 is attached to the housing 10A. Thus, compared with a case where the screen unit 300 is attached to the mirror unit 305, which is positioned on the upstream side in the light path, heat of the screen 15 and the screen unit 300 can be easily dissipated, and decrease of image quality can be suppressed.

The screen unit 300 is attachable to and removable from the housing 10A without removing the mirror 401 and the second mirror 402 of the mirror unit 305, the light deflecting device 13, and the like from the housing 10A. Therefore, it is easy to perform maintenance and replacement of the screen unit 300 alone. Thus, even if the screen 15 deforms or fades, decrease of image quality can be suppressed by performing replacement or maintenance of the screen 15.

Moreover, because the curvature of the front glass 50 differs between types (model types) of the mobile body 1A, the size, the position, and the angle of the screen 15 need to be finely adjusted in accordance with the image-forming optical system (the freeform surface mirror 30). However, by making the screen unit 300 attachable to and removable from the housing 10A, the housing 10A and the like of the common type can be used for different types of the mobile bodies 1A, and the productivity can be improved. Hardware Configuration

FIG. 9 illustrates a hardware configuration of the display device according to an embodiment of the present disclosure. As appropriate, elements may be added to or omitted from the hardware configuration illustrated in FIG. 9.

The display device 10 includes a control device 17 for controlling the operation of the display device 10. The control device 17 is a controller that is a circuit board or an IC chip mounted in the display device 10. The control device 17 includes a field-programmable gate array (FPGA) 1001, a central processing unit (CPU) 1002, a read only memory (ROM) 1003, a random access memory (RAM) 1004, an interface (I/F) 1005, a bus line 1006, an LD driver 1008, a MEMS controller 1010, and a motor driver 1012.

The FPGA 1001 is an integrated circuit whose setting can be changed by the designer of the display device 10. The LD driver 1008, the MEMS controller 1010, and the motor driver 1012 generate drive signals in accordance with control signals from the FPGA 1001. The CPU 1002 is an integrated circuit that performs processing for controlling the entirety of the display device 10. The ROM 1003 is a storage device that stores programs for controlling the CPU 1002. The RAM 1004 is a storage device that functions as a work area of the CPU 1002. The I/F 1005 is an interface for communicating with an external apparatus. For example, the I/F 1005 is connected to a controller area network (CAN) of an automobile.

An LD 1007 is, for example, a semiconductor light-emitting element included in the light source device 11. The LD driver 1008 is a circuit that generates a drive signal for driving the LD 1007. A MEMS 1009 is a device that is included in the light deflecting device 13 and that displaces a scanning mirror. The MEMS controller 1010 is a circuit that generates a drive signal for driving the MEMS 1009. A motor 1011 is an electric motor that rotates the rotation shaft of the freeform surface mirror 30. The motor driver 1012 is a circuit that generates a drive signal for driving the motor 1011.

### Functional Configuration

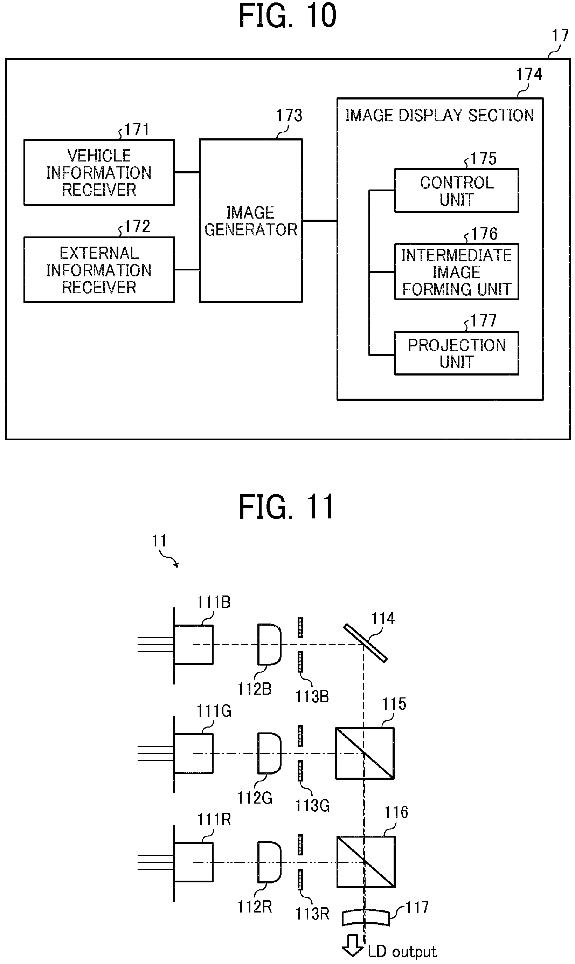

FIG. 10 illustrates a functional configuration of the display device according to an embodiment of the present disclosure. The functions realized by the display device 10 include a vehicle information receiver 171, an external information receiver 172, an image generator 173, and an image display section 174.

The vehicle information receiver 171 is a function of receiving automobile information (information such as velocity and travelled distance) from the CAN and the like. The vehicle information receiver 171 is realized by processing performed by the I/F 1005 and the CPU 1002 illustrated in FIG. 9, a program stored in the ROM 1003, and the like.

The external information receiver 172 is a function of receiving information outside the automobile (position information from a GPS, route information from a navigation system, traffic information, and the like) from an external network. The external information receiver 172 is realized by processing performed by the I/F 1005 and the CPU 1002 illustrated in FIG. 9, a program stored in the ROM 1003, and the like.

The image generator 173 is a function of generating image information for displaying the intermediate image 40 and the virtual image 45 based on information that is input by the vehicle information receiver 171 and the external information receiver 172. The image generator 173 is realized by processing performed by the CPU 1002 illustrated in FIG. 9, a program stored in the ROM 1003, and the like.

The image display section 174 is a function of forming the intermediate image 40 on the screen 15 and projecting a laser beam representing the intermediate image 40 toward the front glass 50 to display the virtual image 45 based on image information generated by the image generator 173. The image display section 174 is realized by processing performed by the CPU 1002, the FPGA 1001, the LD driver 1008, the MEMS controller 1010, and the motor driver 1012 illustrated in FIG. 9, a program stored in the ROM 1003, and the like.

The image display section 174 includes a control unit 175, an intermediate image forming unit 176, and a projection unit 177. The control unit 175 generates control signals for controlling the operations of the light source device 11 and the light deflecting device 13 in order to form the intermediate image 40. Moreover, the control unit 175 generates a control signal for controlling the operation of the freeform surface mirror 30 in order to display the virtual image 45 at a predetermined position.

The intermediate image forming unit 176 forms the intermediate image 40 on the screen 15 based on a control signal generated by the control unit 175. The projection unit 177 projects a laser beam that forms the intermediate image 40 onto a transmissive reflection member (the front glass 50 or the like) in order to form the virtual image 45, which is to be visually recognized by the observer 3.

### Light Source Device

FIG.11 illustrates a specific configuration of the light source device 11 according to an embodiment of the present disclosure. The light source device 11 includes, in addition to the elements illustrated in FIG. 7, the apertures 113R, 113G, and 113B between the coupling lenses 112R, 112G, and 112B and the combining elements 114, 115, and 116. The apertures 113R, 113G, and 113B respectively shape laser beams coupled by the coupling lenses 112R, 112G, and 112B. The apertures 113R, 113G, and 113B each have a shape (such as a circular shape, an elliptical shape, a rectangular shape, a square shape, or the like) that is appropriate for a predetermined condition, such as a diffusion angle of a laser beam.

### Light Deflecting Device

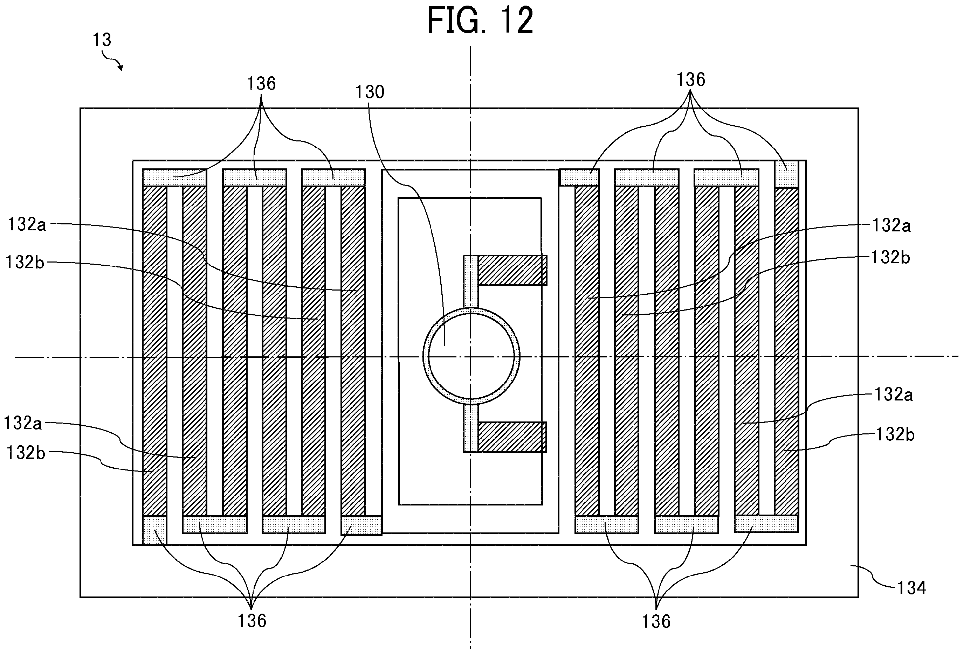

FIG. 12 illustrates a specific configuration of a light deflecting device according to an embodiment of the present disclosure. The light deflecting device 13 is a MEMS mirror that is manufactured through a semiconductor process, and includes a mirror 130, a pair of meandering beam portions 132, a frame member 134, and piezoelectric members 136. The light deflecting device 13 is an example of a scanning portion.

The mirror 130 has a reflection surface that reflects a laser beam, which is emitted from the light source device 11, toward the screen 15. In the light deflecting device 13, the mirror 130 is disposed between the pair of the meandering beam portions 132. The meandering beam portions 132 each include a plurality of bent portions. The bent portions include first beam portions 132a and second beam portions 132b that are alternately arranged. The meandering beam portions 132 are supported by the frame member 134. The piezoelectric members 136 are disposed so as to connect the first beam portions 132a and the second beam portion 132b that are adjacent to each other. The piezoelectric members 136 apply different voltages to the first beam portions 132a and the second beam portion 132b to respectively warp the beam portions 132a and 132b.

Thus, adjacent beam portions 132a and 132b become twisted in different directions. As twists are accumulated, the mirror 130 rotates in the vertical direction around an axis in the right and left directions. With such a configuration, the light deflecting device 13 can perform light scanning in the vertical direction with a low voltage. Light scanning in the horizontal direction around an axis in the up-and-down directions is performed by resonance using a torsion bar or the like that is connected to the mirror 130.

### Screen

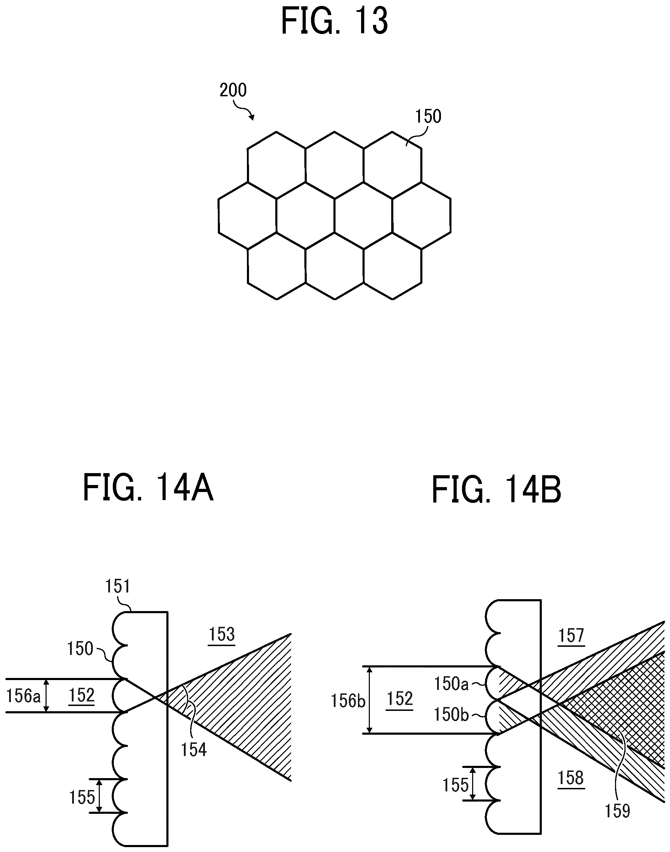

FIG. 13 illustrates a specific configuration of a screen according to an embodiment of the present disclosure. A laser beam emitted from the LD 1007, which is included in the light source device 11, forms an image on the screen 15. The screen 15 is a diffusion member that diffuses a laser beam at a predetermined diffusion angle. The screen 15 illustrated in FIG. 13 has a microlens array structure in which a plurality of microlenses 150 (convex portions each as an example of a curved portion), each having a hexagonal shape, are arranged with no gap therebetween. This microlens structure is an example in which a plurality of curved portions are arranged so as to diffuse light. The lens diameter of each of the microlenses 150 (the distance between opposite sides) is about 200 µm. In the screen 15, the plurality of microlenses 150 can be arranged with high density by forming the shape of each of the microlenses 150 as a hexagon. Details of a microlens array 200 and the microlenses 150 according to the present embodiment will be described below.

FIGs. 14A and 14B illustrate difference in function of the microlens array due to difference in magnitude relationship between an incident light beam diameter and a lens diameter. In FIG. 14A, the screen 15 is an optical plate 151 in which the microlenses 150 are regularly arranged. When incident light 152 is scanned over the optical plate 151, the incident light 152 is diffused by the microlenses 150 and becomes diffused light 153. Due to the structure of the microlenses 150, the screen 15 can diffuse the incident light 152 at a desirable diffusion angle 154. The lens diameter 155 of each of the microlenses 150 is designed to be larger than the diameter 156a of the incident light 152. Thus, the screen 15 does not cause interference between the lenses and can suppress generation of interference noise.

FIG. 14B illustrates a light path of diffused light when the diameter 156b of the incident light 152 is twice the lens diameter 155 of the microlenses 150. The incident light 152 enters two microlenses 150a and 150b, which respectively generate diffused light beams 157 and 158. At this time, because the two diffused light beams are present in a region 159, interference between the light beams may occur. If the interference light enters the eye of the observer, the observer visually recognizes the interference light as interference noise.

With consideration of the above, in order to reduce interference noise, the lens diameter 155 of each of the microlenses 150 is designed to be larger than the diameter 156 of incident light. In FIGs. 14A and 14B, the lenses are convex lenses. However, it is assumed that concave lenses provide the same advantageous effects.

### Light Scanning by Light Deflecting Device

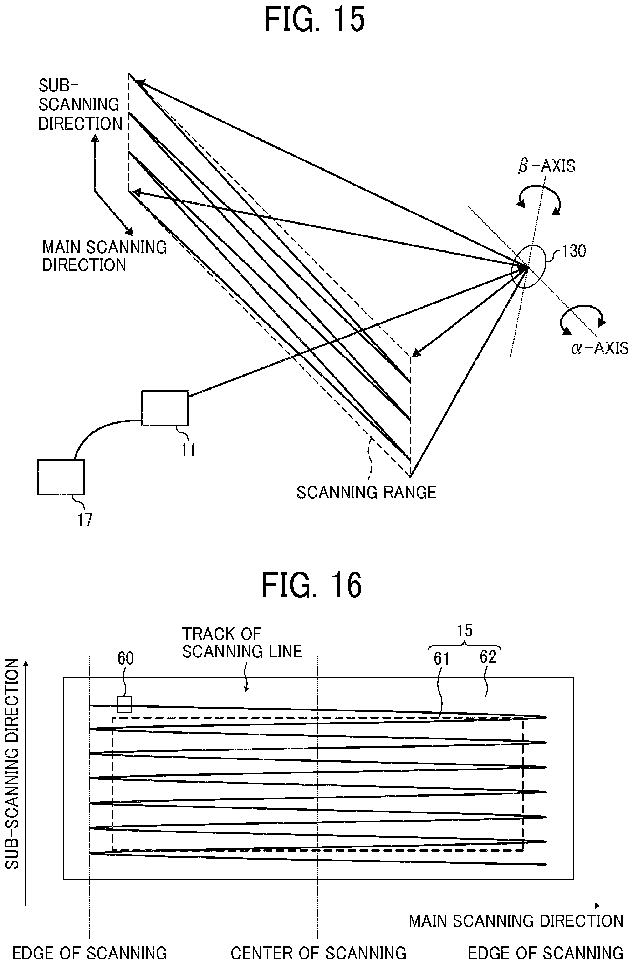

FIG. 15 illustrates correspondence between a mirror of the light deflecting device and the scanning range. The FPGA 1001 controls the emission intensity, the emission timing, and the light waveform of each of the light source elements of the light source device 11. Each of the light source elements of the light source device 11 is driven by the LD driver 1008 and emits a laser beam. As illustrated in FIG. 15, a laser beam that is formed by combining the light paths of laser beams emitted from the light source elements is two-dimensionally deflected by the mirror 130 of the light deflecting device 13 around the α axis and around the β axis. Then, the laser beam is projected, as scanning light, onto the screen 5 via the mirror 130. That is, the screen 15 is two-dimensionally scanned by main scanning and sub-scanning by the light deflecting device 13.

The scanning range is the entire area that can be scanned by the light deflecting device 13. The scanning light scans the scanning range of the screen 15 one way in the sub-scanning direction at a low frequency of about several tens of hertz, while performing vibration scanning (two-way scanning) in the main scanning direction at a high frequency of about 20000 to 40000 Hz. That is, the light deflecting device 13 performs raster scan across the screen 15. In this case, by performing emission control of each of the optical elements in accordance with the scanning position (the position of scanning light), the display device 10 can display an image or a virtual image from pixel to pixel.

The time required to display one screen, that is, the scanning time for one frame (one period of two-dimensional scanning) is several tens of milliseconds, because the sub-scanning frequency is several tens of hertz as described above. For example, if the main scanning frequency is 20000 Hz and the sub-scanning frequency is 50 Hz, the scanning time for one frame is 20 msec.

FIG. 16 illustrates the track of scanning lines during two-dimensional scanning. As illustrated in FIG. 16, the screen 15 includes an image region 61 (effective scanning region) in which the intermediate image 40 is formed (to which light that is modulated in accordance with image data is emitted), and a frame region 62 that surrounds the image region 61.

The scanning range is an area of the screen 15 that includes the image region 61 and a part of the frame region 62 (a part near the outer edge of the image region 61). In FIG. 16, the track of the scanning lines in the scanning range is indicated by zigzag lines. In FIG. 16, for convenience of illustration, the number of scanning lines is smaller than the actual number of scanning lines.

As described above, the screen 15 includes a transmissive optical element that has light diffusing effect, such as the microlens array 200. The image region 61 need not be a rectangular surface or a flat surface, and maybe a polygonal surface or a curved surface. Depending on the device layout, the screen 15 may be, for example, a reflective optical element that has light diffusing effect, such as a micromirror array. In the following description, the present embodiment will be described on the assumption that the screen 15 includes the microlens array 200.

The screen 15 includes a synchronous detection system 60 that is in a peripheral region of the image region 61 (a part of the frame region 62) of the scanning range and that includes a light receiving element. In FIG. 16, the synchronous detection system 60 is disposed at a corner of the image region 61 on the -X side and on the +Y side. The synchronous detection system 60 detects an operation of the light deflecting device 13 and outputs a synchronous signal, for determining a scanning start timing and a scanning finish timing, to the FPGA 1001.

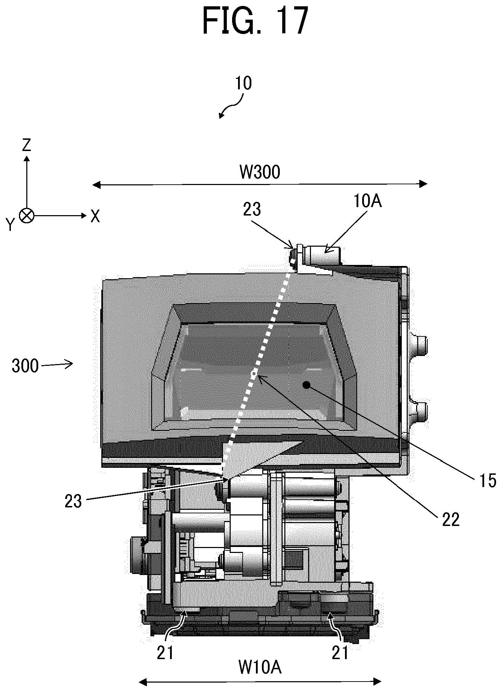

FIG. 17 is a front view of the display device 10 according to an embodiment of the present disclosure, as viewed from the right side in the Y direction.

The display device 10 is contained in the mounted device 100 as illustrated in FIGs. 5 and 6, and the mounted device 100 is contained in the dashboard 2 as illustrated in FIG. 1. The containing space in the dashboard 2 is narrowed by, for example: a cross beam, which is a part of the structural frame; a ventilation duct; a speedometer; an instrument panel including a warning lamp and the like. Therefore, a space that the display device 10 can occupy while avoiding these contents is limited.

On the other hand, a display image that is to be visually recognized by the observer 3 needs to be enlarged in order to realize an augmented reality (AR) display that is overlaid on a nearby vehicle, a pedestrian, and the like. Therefore, the size of the screen 15 needs to be increased in view angle and in size, particularly in the main scanning direction corresponding to the right and left directions of the mobile body 1A.

The present embodiment has been made in consideration of the above, and an object of the present embodiment is to realize both of improvement of image quality and reduction of occupied space.

Because the screen 15 itself is a thin resin plate, due to an inertial force that is generated due to vibration caused by bumpy road surface and acceleration and deceleration of the mobile body 1A, distortion of the screen surface may occur, and the image quality may decrease.

Another object the present embodiment is to suppress decrease of image quality due to vibration of the mobile body 1A.

The display device 10 illustrated in FIG. 17 is configured so that, in the X direction, the width W10A of the housing 10A is smaller than the width W300 of the screen unit 300.

The display device 10 includes a plurality of (four) display-device attachment portions 21, and is attached to the mounted device 100 via the plurality of display-device attachment portions 21. Because the setting surface of the mounted device 100 may not be flat, the positions (heights) of the plurality of (four) display-device attachment portions 21 in the Z direction may differ from each other. The number of the plurality of display-device attachment portions 21 may be three.

The screen unit 300 includes a plurality of (two) unit attachment portions 23, and is attached to the housing 10A via the plurality of unit attachment portions 23. The number of the unit attachment portions 23 may be three or four.

In the XY plane, the center of the plurality of unit attachment portions 23 is substantially the same as the center of gravity 22 of the screen unit. In the present embodiment, because the number of the unit attachment portions 23 is two, the center of the plurality of unit attachment portions 23 is the midpoint between the two unit attachment portions 23.

Attachment surfaces of the display-device attachment portions 21 that are attached to the mounted device 100 are parallel to the XY plane. Second attachment surfaces of the unit attachment portions 23 that are attached to the display device 10 are parallel to the YZ plane. That is, the second attachment surfaces of the unit attachment portions 23 that are attached to the display device 10 are inclined relative to the attachment surfaces of the display-device attachment portions 21 that are attached to the mounted device 100.

In the Z direction, the display-device attachment portions 21 are disposed on the lower side the housing 10A, and the unit attachment portions 23 are disposed on the upper side of the housing 10A, which is opposite to the display-device attachment portions 21. In the Z direction, one of the unit attachment portions 23 is disposed at an upper end of the screen unit 300, and the other unit attachment portion 23 is disposed at a lower end of the screen unit 300. The screen unit 300 is attached to the housing 10A at both ends in the Z direction.

The X direction is the main scanning direction in which the light deflecting device 13 scans image light over the screen 15. The Z direction is the sub-scanning direction that is perpendicular to the main scanning direction.

Thus, in the sub-scanning direction, the unit attachment portions 23 are disposed on the opposite side of the housing 10A from the display-device attachment portions 21. The screen unit 300 is attached to the housing 10A at both ends in the sub-scanning direction.

In the main scanning direction, the width W10A of the housing 10A is smaller than the width W300 of the screen unit 300.

As described above, in the display device 10 according to the present embodiment, in the X direction, that is, in the main scanning direction, the width W10A of the housing 10A is smaller than the width W300 of the screen unit 300. Therefore, while enabling the screen 15 to have a sufficient size in the main scanning direction and maintaining high image quality, it is possible to reduce the size of the housing 10A in the main scanning direction and to reduce the size of the space that the display device 10 occupies.

The screen unit 300 is attached to the housing 10A at both ends in the sub-scanning direction. Therefore, it is possible to suppress swinging of the screen unit 300 relative to the display-device attachment portions 21 and to suppress decrease of image quality due to vibration of the mobile body 1A. In the XY plane, the center of the plurality of unit attachment portions 23 is substantially the same as the center of gravity 22 of the screen unit. Thus, the screen unit 300 is held by the housing 10A without applying a moment to the housing 10A, so that vibration is suppressed.

Moreover, the second attachment surfaces of the unit attachment portions 23 that are attached to the display device 10 are inclined relative to the attachment surfaces of the display-device attachment portions 21 that are attached to the mounted device 100. Therefore, vibration that is transmitted from the mobile body 1A to the display device 10 via the mounted device 100 is suppressed from being transmitted the screen unit 300 and the screen 15 via the housing 10A.

To be specific, although vibration in the direction perpendicular to attachment surfaces is easily transferred via the attachment surfaces, because the direction of vibration that is perpendicular to the attachment surfaces of the display-device attachment portions 21 is inclined relative to the direction that is perpendicular the second attachment surfaces of the unit attachment portions 23, vibration that is transmitted via the second attachment surfaces of the unit attachment portions 23 is reduced.

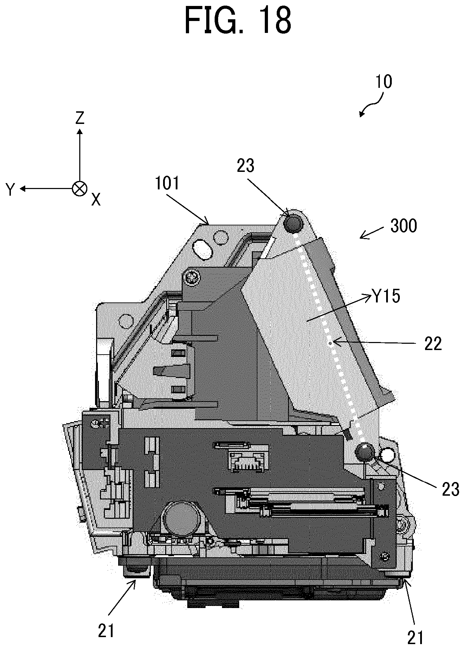

FIG. 18 is a side view of the display device 10 according to an embodiment of the present disclosure, as viewed from the back side in the X direction.

In the YZ plane, the center of the plurality of unit attachment portions 23 is substantially the same as the center of gravity 22 of the screen unit. Thus, the screen unit 300 is supported without applying a moment to the housing 10A, so that vibration is suppressed.

The screen unit 300 is attached to the housing 10A in such a way that a normal direction Y15 of the surface of the screen 15 intersects both of the Z direction (the vertical direction) and the X direction (the forward and backward directions of the mobile body 1A). Due to layout limitation, preferably, the angle between the Z direction (the vertical direction) and the normal direction Y15 of the surface of the screen 15 is larger than or equal to 45 degrees.

The normal direction Y15 of the surface of the screen 15 intersects a plane that includes the Z direction (the vertical direction) and the X direction (the forward and backward directions of the mobile body 1A), and is substantially the same as the Y direction (the right and left directions of the mobile body 1A).

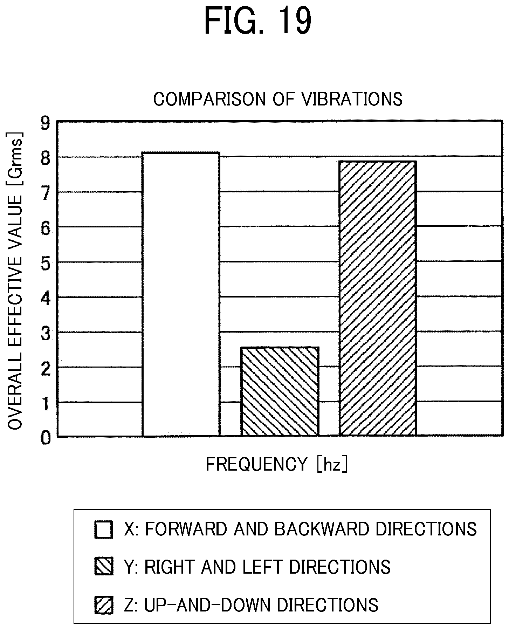

FIG. 19 illustrates overall effective values, in the X, Y, and Z directions, of the attachment portions 41a to 41d of the mounted device 100 relative to the mobile body 1A according to an embodiment of the present disclosure. In FIG. 19, the horizontal axis represents the frequency (Hz), and the vertical axis represents the overall effective value. The overall effective value represents the magnitude of acceleration in the entire frequency range. In FIG. 19, the white bar represents the overall effective value of vibration in the forward and backward directions of the mobile body 1A (the X direction), the rightward-hatched bar represents the overall effective value of vibration in the right and left directions of the mobile body 1A (the Y direction), and the leftward-hatched bar represents the overall effective value of vibration in the up-and-down directions of the mobile body 1A (the direction of gravity, that is, the Z direction).

As can be seen from FIG. 19, the overall effective value of vibration of the mobile body 1A in the Y direction (the right and left directions) is smaller than that in the X direction (the forward and backward directions) and that in the Z direction (the direction of gravity). This is because the X direction and the Z direction of the mobile body 1A are directions that are sensitive to bumps in a road or variation in vehicle velocity, while the Y direction is a direction that is not easily affected by these.

The screen 15 includes the microlens array 200 illustrated in FIG. 13. Although displacement of the microlens array 200 in the in-plane direction does not affect a display image, displacement of the microlens array 200 in the thickness direction Y15 (the normal direction of the surface of the screen 15) affects a display image because the displacement changes the image-forming position of the lens.

Therefore, in the embodiment illustrated in FIG. 18, the normal direction Y15 of the surface of the screen 15 intersects both of the Z direction (the vertical direction) and the X direction (the forward and backward directions of the mobile body 1A). Thus, it is possible to suppress vibration components in the X direction and the Z direction from being transmitted in the normal direction Y15 of the surface of the screen 15 and to suppress image blur (vibration) even when disturbance such as vibration of the mobile body 1A occurs.

Moreover, the normal direction Y15 of the surface of the screen 15 intersects a plane that includes the Z direction (the vertical direction) and the X direction (the forward and backward directions of the mobile body 1A) and is substantially the same as the Y direction (the right and left directions of the mobile body 1A). Thus, it is possible to suppress vibration components of the X direction and the Z direction from being transmitted in the normal direction Y15 of the surface of the screen 15 and to suppress image blur (vibration) even when disturbance such as vibration of the mobile body 1A occurs.

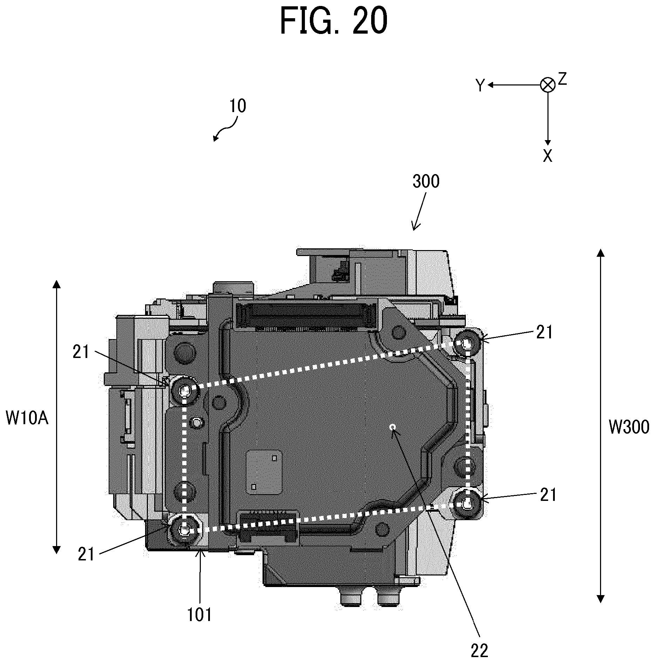

FIG. 20 is a side view of the display device 10 according to an embodiment of the present disclosure, as viewed from the lower side in the Z direction.

In the XY plane, the screen unit 300 is attached to the housing 10A in such a way that the center of gravity 22 of the screen unit is positioned inside a region that is surrounded by the plurality of (four) display-device attachment portions 21. The plurality of (four) display-device attachment portions 21 are arranged on the bottom surface of the housing 10A in such way that the display-device attachment portions 21 are separated from each other by the maximum distance.

Thus, in the X direction, that is, in the main scanning direction, even if the width W10A of the housing 10A is smaller than the width W300 of the screen unit 300, vibration of the housing 10A due to application of a moment is suppressed, and image blur (vibration) can be suppressed even when disturbance such as vibration of the mobile body 1A occurs.

In the XY plane, the center of the plurality of unit attachment portions 23 is substantially the same as the center of gravity 22 of the screen unit. Thus, the screen unit 300 is supported without applying a moment to the housing 10A, so that vibration is suppressed.

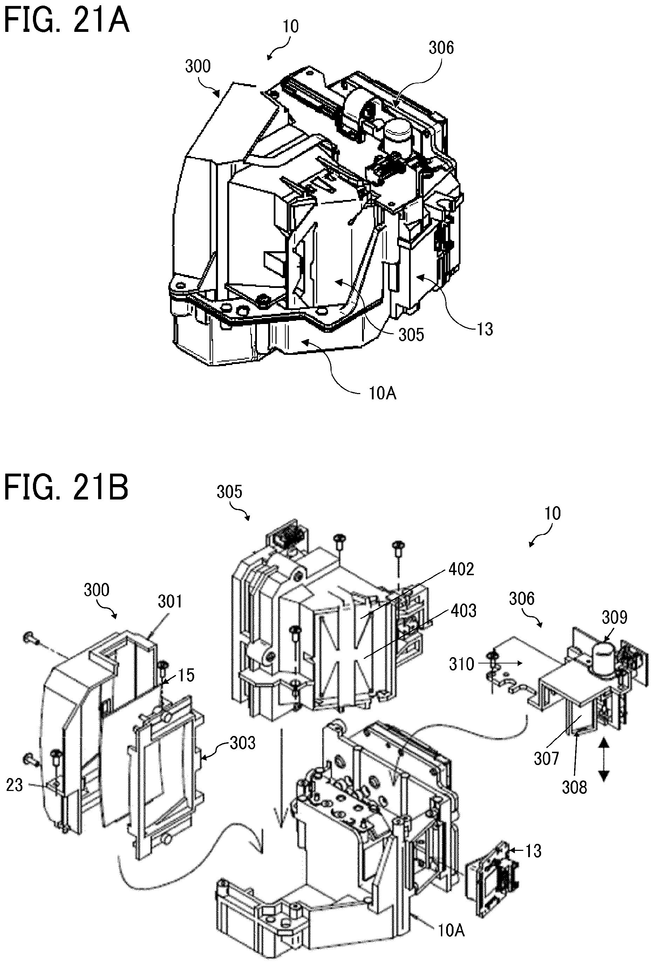

FIG. 21A is a perspective view and FIG. 21B is an exploded perspective view of the display device 10.

As illustrated in FIG. 7, the display device 10 is formed by assembling the housing 10A, the mirror unit 305, and the screen unit 300. The light deflecting device 13 and a light control unit 306 are removable from the housing 10A.

The screen unit 300 includes a first holding member 301 that holds the screen 15 from the front surface side and a second holding member 302 that holds the screen 15 from the back surface side. The first holding member 301 and the second holding member 302 engage with each other and hold the screen 15 therebetween. The plurality of (two) unit attachment portions 23 are included in the first holding member 301, and the first holding member 301 is attached to the housing 10A via the plurality of unit attachment portions 23.

The mirror unit 305 includes a plate spring 403 that urges the second mirror 402. The second mirror 402 is held in a state in which a reflection surface is in contact with a contact surface of the mirror unit 305.

The light control unit 306 includes a filter holding member 308 that holds the filter 307, a motor 309 that moves the filter holding member 308, and a cover member 310 that seals the upper surface of the housing 10A. The filter holding member 308 is screwed onto a lead screw that is formed on the shaft of the motor 309 and is movable in the direction of a double-headed arrow in FIG. 21B. As the filter 307 moves together with the filter holding member 308, the brightness of light that is incident on the light deflecting device 13 is adjusted.

The light deflecting device 13 is bonded to and supported by an outer wall of the housing 10A in such a way that the mirror 130, which is illustrated in FIG. 12, is exposed through a rectangular opening formed in the housing 10A.

In the display device 10 mounted on the mobile body 1A, the size, the position, and the angle of the screen 15 or the like need to be finely adjusted in accordance with the curvature of the front glass 50, which differs between the types (model types) of the mobile body 1A. However, with the present embodiment, by making optical components, such as the screen unit 300 and other units and the light deflecting device 13, attachable to and removable from the housing 10A, the other portions of the common type can be used for different types of the mobile body 1A, and the productivity can be improved.

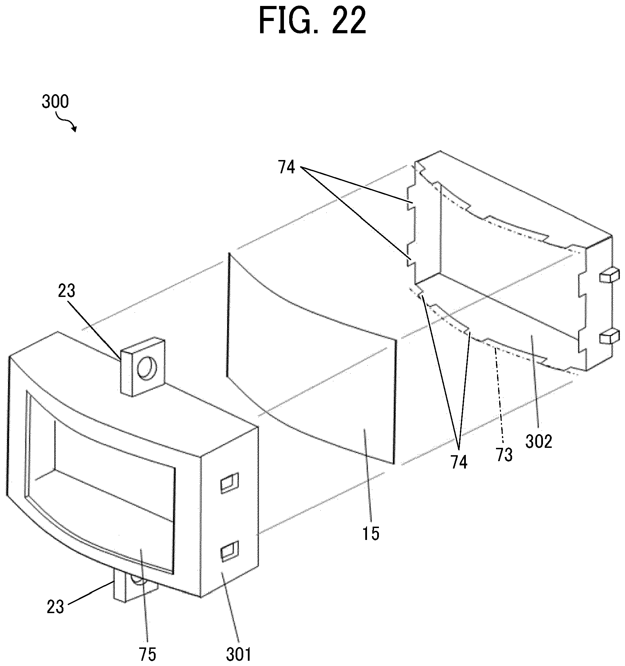

FIG. 22 is an exploded perspective view of the screen unit 300.

As described above with reference to FIG. 8, sunlight falling on the front glass 50 may travel reversely along the light path and may reach the screen 15 or the screen unit 300. An object of the present embodiment is to suppress reduction in image quality due to deformation or fading of the screen 15 caused by heat of sunlight.

The first holding member 301 has an open window 75 from which image light diffused by the screen 15 is emitted to the outside.

The second holding member 302 has a box-frame like shape, and includes a plurality of protrusions 74 that are in contact with the screen 15. Some of the plurality of protrusions 74 are formed along an arc-shaped portion 73 that corrects the shape of the screen 15 into an arc shape by contacting a part the screen 15 around the image display portion.

The screen 15 may have a curved shape or a flat shape. In the present embodiment, the screen 15 has a curved shape. The screen 15 is made from a thin resin plate and has flexibility. By being held between the first holding member 301 and the second holding member 302, the screen 15 is held in an arc shape in contact with the plurality of protrusions 74.

The first holding member 301 is made of a metal, and the second holding member 302 is made of a resin. The first holding member 301, whose thermal conductivity is higher, includes the plurality of (two) unit attachment portions 23 that are attached to the housing 10A. Thus, compared with a case where the second holding member 302, whose thermal conductivity is lower, includes the unit attachment portions 23, heat of the screen 15 and the screen unit 300 can be easily dissipated to the housing 10A.

The housing 10A is made of die-cast aluminum. The thermal conductivity of the first holding member 301 is closer than the thermal conductivity of the second holding member 302 to the thermal conductivity of the housing 10A. Thus, temperature variance in the entirety of the display device 10 can be more effectively reduced.

The thermal conductivity of the joint interface of the unit attachment portions 23 is substantially equal to the thermal conductivity of the first holding member 301 or lower than the thermal conductivity of the second holding member 302. Thus, heat can be efficiently dissipated to the housing 10A.

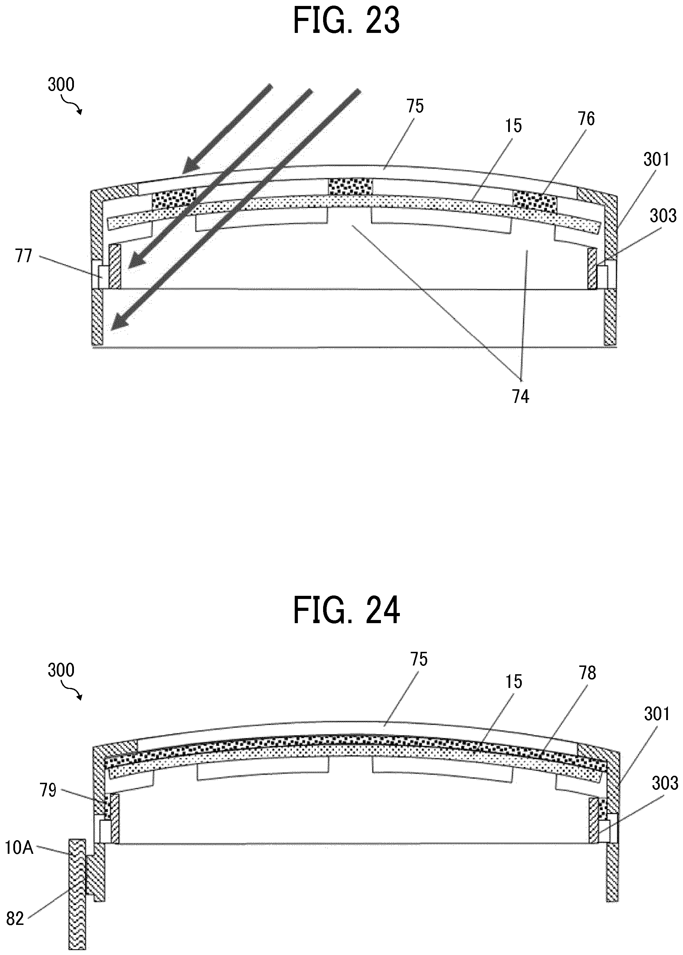

FIG. 23 is a cross-sectional view of the screen unit 300.

To the first holding member 301, elastic members 76 that face the plurality of protrusions 74 of the second holding member 302 are affixed. The elastic members 76 are made of a material that has a comparatively high thermal conductivity and flexibility, such as silicone rubber.

When the second holding member 302 is fitted into the first holding member 301, protrusions 77 of the second holding member 302 engage with the first holding member 301. Because the screen 15 is held between the plurality of protrusions 74 of the second holding member 302 and the elastic members 76 of the first holding member 301, the screen 15 is pressed by the elastic members 76 and reliably contacts the plurality of protrusions 74. Thus, the screen 15 is corrected into an arc shape with a desirable curvature.

FIG. 24 is a cross-sectional view of the screen unit 300 according to a modification.

The first holding member 301 includes a heat dissipating portion 82 that directly contacts the housing 10A, in addition to the unit attachment portions 23.

The screen unit 300 includes a heat conductive member 79, which is disposed between the first holding member 301 and the second holding member 302 and which reduces thermal resistance; and a sponge 78, which is disposed between the screen 15 and the first holding member 301 and which increases thermal resistance. The first holding member 301 and the second holding member 302 may be in direct contact with each other.

Thus, the thermal resistance between the first holding member 301 and the housing 10A can be made smaller than the thermal resistance between the screen 15 and the first holding member 301. Thus, the amount of heat conducted to the screen 15 can be reduced.

The thermal resistance between the first holding member 301 and the second holding member 302 can be made smaller than the thermal resistance between the screen 15 and the first holding member 301. Thus, the amount of heat conducted to the screen 15 can be reduced.

Moreover, with the plurality of protrusions 74 of the second holding member 302, the area of contact with the screen 15 can be maximally reduced, and the amount of heat conducted to the screen 15 can be reduced.

### Supplemental Remarks

A display device, a display system, and a mobile body according to an embodiment of the present invention have been described above. However, the present invention is limited by the appended claims.

A display device according to an embodiment of the present invention is not limited to a HUD device, and may be, for example, a head mount display device, a prompter device, a projector device, or the like. For example, when a display device according to an embodiment of the present invention is used as a projector device, the projector device may be configured in a similar way to the display device 10. That is, the display device 10 may project image light via the freeform surface mirror 30 toward a projection screen, a wall surface, or the like. The display device 10 may project image light via the screen 15 toward a projection screen, a wall surface, or the like without using the freeform surface mirror 30.

Numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of the appended claims.

## Claims

1. A display device (10) comprising:
a light source (11);
an image forming unit (13) configured to receive irradiation light emitted from the light source (11) and emit image light for forming an image;
a screen (15) on which the image light forms an image;
a housing (10A) configured to contain the light source (11) and the image forming unit (13); and
a holding member (300) configured to hold the screen (15) and attached to the housing (10A);
**characterized in that** the holding member (300) includes
a first holding member (301) configured to hold the screen (15) from a front surface side, and
a second holding member (302) configured to hold the screen (15) from a back surface side, and
wherein one of the first holding member (301) and the second holding member (302) that has a higher thermal conductivity includes an attachment portion (23) that is attached to the housing (10A).

2. The display device (10) according to Claim 1,
wherein the holding member (300) is attachable to and removable from the housing (10A) without removing the image forming unit (13) from the housing (10A).

3. The display device (10) according to Claim 1 or 2, comprising:
a mirror (401, 402) disposed between the image forming unit (13) and the screen (15) and configured to reflect the image light,
wherein the holding member (300) is attachable to and removable from the housing (10A) without removing the mirror (401, 402) from the housing (10A).

4. The display device (10) according to Claim 3, comprising:
a mirror holding member (305) configured to hold the mirror (401, 402) and attached to the housing (10A),
wherein the housing (10A) has a higher thermal conductivity than the mirror holding member (305).

5. The display device (10) according to any preceding claim,
wherein the first holding member (301) is made of a metal, and the second holding member (302) is made of a resin, and
wherein the first holding member (301) includes the attachment portion (23).

6. The display device (10) according to any preceding claim,
wherein the second holding member (302) includes a plurality of protrusions (74) that are in contact with the screen (15).

7. The display device (10) according to any preceding claim,
wherein a thermal conductivity of a joint interface of the attachment portion (23) is substantially equal to a thermal conductivity of the first holding member (301) or lower than a thermal conductivity of the second holding member (302).

8. The display device (10) according to any preceding claim,
wherein a thermal conductivity of the first holding member (301) is closer than a thermal conductivity of the second holding member (302) to a thermal conductivity of the housing (10A).

9. The display device (10) according to any preceding claim,
wherein a thermal resistance between the first holding member (301) and the housing (10A) is smaller than a thermal resistance between the screen (15) and the first holding member (301).

10. The display device (10) according to any preceding claim,
wherein a thermal resistance between the first holding member (301) and the second holding member (302) is smaller than a thermal resistance between the screen (15) and the first holding member (301).

11. A mobile body (1A) comprising:
the display device (10) according to any one of Claims 1 to 10,
wherein the screen (15) is configured to diffuse and project the image light, and
wherein the mobile body further comprises
a front glass (50) configured to reflect the image light; and
an image-forming optical system (30) configured to project, toward the front glass (50), the image light projected from the screen (15).

## Patentansprüche

1. Anzeigevorrichtung (10), umfassend:
eine Lichtquelle (11);
eine Bilderzeugungseinheit (13), die konfiguriert ist, um Bestrahlungslicht, das von der Lichtquelle (11) emittiert wird, zu empfangen und Bildlicht zum Erzeugen eines Bilds zu emittieren;
einen Bildschirm (15), auf dem das Bildlicht ein Bild erzeugt;
ein Gehäuse (10A), das konfiguriert ist, um die Lichtquelle (11) und die Bilderzeugungseinheit (13) zu enthalten; und
ein Halteelement (300), das konfiguriert ist, um den Bildschirm (15) zu halten, und das an dem Gehäuse (10A) befestigt ist;
**dadurch gekennzeichnet, dass** das Halteelement (300) Folgendes beinhaltet
ein erste Halteelement (301), das konfiguriert ist, um den Bildschirm (15) von einer vorderen Oberflächenseite zu halten, und
ein zweites Halteelement (302), das konfiguriert ist, um den Bildschirm (15) von einer hinteren Oberflächenseite zu halten, und
wobei eines des ersten Halteelements (301) und des zweiten Halteelements (302), das eine höhere Wärmeleitfähigkeit aufweist, einen Befestigungsabschnitt (23) beinhaltet, der an dem Gehäuse (10A) befestigt ist.

2. Anzeigevorrichtung (10) nach Anspruch 1,
wobei das Halteelement (300) an dem Gehäuse (10A) befestigt und davon entfernt werden kann, ohne die Bilderzeugungseinheit (13) von dem Gehäuse (10A) zu entfernen.

3. Anzeigevorrichtung (10) nach Anspruch 1 oder 2, umfassend:
einen Spiegel (401, 402), angeordnet zwischen der Bilderzeugungseinheit (13) und dem Bildschirm (15) und konfiguriert, um das Bildlicht zu reflektieren,
wobei das Halteelement (300) an dem Gehäuse (10A) befestigt und davon entfernt werden kann, ohne den Spiegel (401, 402) von dem Gehäuse (10A) zu entfernen.

4. Anzeigevorrichtung (10) nach Anspruch 3, umfassend:
ein Spiegelhalteelement (305), das konfiguriert ist, um den Spiegel (401, 402) zu halten, und das an dem Gehäuse (10A) befestigt ist,
wobei das Gehäuse (10A) eine höhere Wärmeleitfähigkeit als das Spiegelhalteelement (305) aufweist.

5. Anzeigevorrichtung (10) nach einem vorhergehenden Anspruch,
wobei das erste Halteelement (301) aus einem Metall hergestellt ist und das zweite Halteelement (302) aus einem Harz hergestellt ist, und
wobei das erste Halteelement (301) den Befestigungsabschnitt (23) beinhaltet.

6. Anzeigevorrichtung (10) nach einem vorhergehenden Anspruch,
wobei das zweite Halteelement (302) eine Vielzahl von Vorsprüngen (74) beinhaltet, die mit dem Bildschirm (15) in Kontakt sind.

7. Anzeigevorrichtung (10) nach einem vorhergehenden Anspruch,
wobei eine Wärmeleitfähigkeit einer gemeinsamen Schnittstelle des Befestigungsabschnitts (23) im Wesentlichen gleich einer Wärmeleitfähigkeit des ersten Halteelements (301) oder geringer als eine Wärmeleitfähigkeit des zweiten Halteelements (302) ist.

8. Anzeigevorrichtung (10) nach einem vorhergehenden Anspruch,
wobei eine Wärmeleitfähigkeit des ersten Halteelements (301) näher an einer Wärmeleitfähigkeit des Gehäuses (10A) als eine Wärmeleitfähigkeit des zweiten Halteelements (302) ist.

9. Anzeigevorrichtung (10) nach einem vorhergehenden Anspruch,
wobei ein Wärmewiderstand zwischen dem ersten Halteelement (301) und dem Gehäuse (10A) kleiner als ein Wärmewiderstand zwischen dem Bildschirm (15) und dem ersten Halteelement (301) ist.

10. Anzeigevorrichtung (10) nach einem vorhergehenden Anspruch,
wobei ein Wärmewiderstand zwischen dem ersten Halteelement (301) und dem zweiten Halteelement (302) kleiner als Wärmewiderstand zwischen dem Bildschirm (15) und dem ersten Halteelement (301) ist.

11. Mobiler Körper (1A), umfassend:
die Anzeigevorrichtung (10) nach einem der Ansprüche 1 bis 10,
wobei der Bildschirm (15) konfiguriert ist, um das Bildlicht zu streuen und zu projizieren, und
wobei der mobile Körper ferner Folgendes umfasst
eine Frontscheibe (50), die konfiguriert ist, um das Bildlicht zu reflektieren, und
ein bildgebendes optisches System (30), das konfiguriert ist, um das Bildlicht, das von dem Bildschirm (15) projiziert wird, hin zu der Frontscheibe (50) zu projizieren.

## Revendications

1. Dispositif d'affichage (10) comprenant :
une source lumineuse (11) ;
une unité de formation d'image (13) configurée pour recevoir une lumière d'irradiation émise par la source lumineuse (11) et émettre une lumière d'image pour former une image ;
un écran (15) sur lequel la lumière d'image forme une image ;
un boîtier (10A) configuré pour contenir la source lumineuse (11) et l'unité de formation d'image (13) ; et
un élément de maintien (300) configuré pour maintenir l'écran (15) et fixé au boîtier (10A) ;
**caractérisé en ce que** l'élément de maintien (300) comprend
un premier élément de maintien (301) configuré pour maintenir l'écran (15) depuis un côté de surface avant, et
un deuxième élément de maintien (302) configuré pour maintenir l'écran (15) depuis un côté de surface arrière, et
dans lequel l'un parmi le premier élément de maintien (301) et le deuxième élément de maintien (302) qui a une conductivité thermique plus élevée comprend une partie de fixation (23) qui est fixée au boîtier (10A).

2. Dispositif d'affichage (10) selon la revendication 1,
dans lequel l'élément de maintien (300) peut être fixé au boîtier (10A) et retiré de celui-ci sans retirer l'unité de formation d'image (13) du boîtier (10A).

3. Dispositif d'affichage (10) selon la revendication 1 ou 2, comprenant :
un miroir (401, 402) disposé entre l'unité de formation d'image (13) et l'écran (15) et configuré pour réfléchir la lumière d'image,
dans lequel l'élément de maintien (300) peut être fixé au boîtier (10A) et retiré de celui-ci sans retirer le miroir (401, 402) du boîtier (10A).

4. Dispositif d'affichage (10) selon la revendication 3, comprenant :
un élément de maintien de miroir (305) configuré pour maintenir le miroir (401, 402) et fixé au boîtier (10A),
dans lequel le boîtier (10A) a une conductivité thermique supérieure à l'élément de maintien de miroir (305).

5. Dispositif d'affichage (10) selon l'une quelconque des revendications précédentes,
dans lequel le premier élément de maintien (301) est en métal, et le deuxième élément de maintien (302) est en résine, et
dans lequel le premier élément de maintien (301) comprend la partie de fixation (23).

6. Dispositif d'affichage (10) selon l'une quelconque des revendications précédentes,
dans lequel le deuxième élément de maintien (302) comprend une pluralité de protubérances (74) qui sont en contact avec l'écran (15).

7. Dispositif d'affichage (10) selon l'une quelconque des revendications précédentes,
dans lequel une conductivité thermique d'une interface de joint de la partie de fixation (23) est sensiblement égale à une conductivité thermique du premier élément de maintien (301) ou inférieure à une conductivité thermique du deuxième élément de maintien (302).

8. Dispositif d'affichage (10) selon l'une quelconque des revendications précédentes,
dans lequel une conductivité thermique du premier élément de maintien (301) est plus proche qu'une conductivité thermique du deuxième élément de maintien (302) d'une conductivité thermique du boîtier (10A).

9. Dispositif d'affichage (10) selon l'une quelconque des revendications précédentes,
dans lequel une résistance thermique entre le premier élément de maintien (301) et le boîtier (10A) est inférieure à une résistance thermique entre l'écran (15) et le premier élément de maintien (301).

10. Dispositif d'affichage (10) selon l'une quelconque des revendications précédentes,
dans lequel une résistance thermique entre le premier élément de maintien (301) et le deuxième élément de maintien (302) est inférieure à une résistance thermique entre l'écran (15) et le premier élément de maintien (301).

11. Corps mobile (1A) comprenant :
le dispositif d'affichage (10) selon l'une quelconque des revendications 1 à 10,
dans lequel l'écran (15) est configuré pour diffuser et projeter la lumière d'image, et
dans lequel le corps mobile comprend en outre
une vitre avant (50) configurée pour réfléchir la lumière d'image ; et
un système optique de formation d'image (30) configuré pour projeter, vers la vitre avant (50), la lumière d'image projetée depuis l'écran (15).
